# EUROPEAN PATENT SPECIFICATION

(11) **EP 2 332 041 B1**
(45) Date of publication and mention of the grant of the patent: **06.01.2016**
(21) Application number: 09787155.2
(22) Date of filing: 09.09.2009
(51) Int. Cl.: G06F 3/0484, G06F 3/0481, G06F 9/44, G06F 3/048

(54) **SYSTEM AND METHOD FOR WINDOW RESIZING**
SYSTEM UND VERFAHREN ZUR FENSTERUMBEMESSUNG
SYSTÈME ET PROCÉDÉ DE REDIMENSIONNEMENT DE FENÊTRE

(30) Priority: 29.09.2008 US 100963 P
(43) Date of publication of application: 15.06.2011
(73) Proprietor: Koninklijke Philips N.V., 5656 AE Eindhoven (NL)
(72) Inventor: VAN ZON, Kees, Cleveland Ohio 44143 (US)
(74) Representative: van Velzen, Maaike Mathilde
(86) International application number: PCT/IB2009/053951
(87) International publication number: WO 2010/035162

(56) References cited:
- EP-A1- 0 537 097
- EP-A2- 0 863 457
- WO-A1-97/11431
- US-A1- 2005 097 475
- US-A1- 2006 253 796

## Description

### Background

Many modern computer operating systems incorporate a graphical user interface ("GUI") to facilitate simple, intuitive user control. GUIs often utilize windowed layouts to display multiple applications or multiple subdivisions of an application simultaneously. In situations where a computer is being used under high time pressure, there is a need for the process of resizing windows to be both rapid and simple.

WO 97/11431 A1 discloses a user interface that includes multiple non-overlapping panes separated by partitions, which are individually moveable so as to effect resizing or movement of abutting panes. Function buttons may be included in a title bar belonging to a pane. A title bar button is said to provide a convenient way to cause the pane to be maximized, and remaining panes to be hidden. A further button can be used to produce a half-maximized layout, which has two panes which together occupy a display area, with remaining panes hidden.

US 2005/097475 A1 discloses a method for comparatively displaying a first image and second image. US 2006/253796 A1 discloses a size to content windows for computer graphics. EP 0 537 097 A1 discloses a method and system for incrementally changing window size on a display. EP 0 863 457 A2 discloses a display screen split method of a computer system.

### Summary of the Invention

The invention is defined by independent claims 1 and 10. Preferred embodiments are disclosed in the dependent claims 2 - 9 and 11-14.

### Brief Description of the Drawings

Figures 1a - 1i show various arrangements of an exemplary display with discretely resizable windows.
Figure 2 shows an alternate layout of an exemplary display with discretely resizable windows.
Figure 3 shows an exemplary display with discretely resizable windows of irregular sizes.
Figures 4a-4d show various magnified views of an exemplary resizable window with controls for rapid resizing.
Figures 5a-5c show various arrangements of an exemplary display with windows that may be resized programmatically.
Figure 6 shows an exemplary computer screen showing a display with discretely resizable windows as well as other content.

### Detailed Description

The exemplary embodiments may be further understood with reference to the following description and the appended drawings, wherein like elements are referred to with the same reference numerals. Described are exemplary systems and methods for rapidly resizing windows on a computer screen.

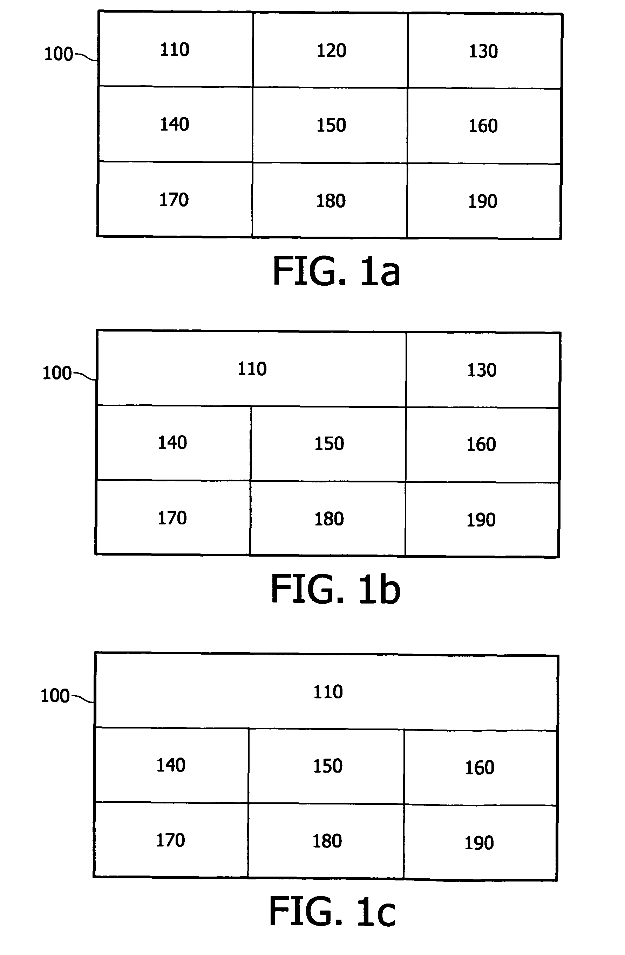

Figures 1a - 1i illustrate an exemplary computer display 100. Those of skill in the art will understand that the display 100 may be shown on any type of screen (e.g., an LCD, a CRT, a projection, etc.), and that the images displayed thereon may be generated by any type of system capable of running a GUI as described herein. Further, those of skill in the art will understand that the display 100 may comprise the entirety of the viewable area of a monitor, or may comprise a subset thereof. Figures 1a - 1i illustrate a display 100 that is subdivided into nine viewing areas containing windows 110, 120, 130, 140, 150, 160, 170, 180 and 190. Each of the viewing areas is rectangular and has dimensions corresponding to the dimensions of the windows 110 - 190. However, the display 100 may have any number of viewing areas with any type of shape and/or size. Each of the windows 110 - 190 can be resized to exactly cover a subset of the respective viewing area of the window, each viewing area being a fixed size. Figure 1a illustrates an exemplary default setup of the display 100, wherein each of the windows 110 - 190 is of equal size.

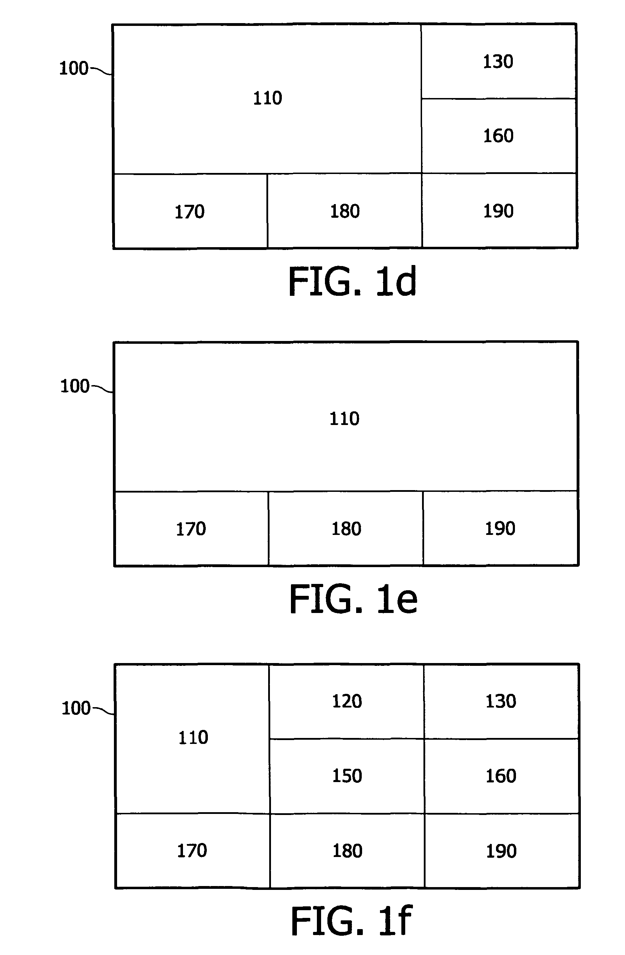

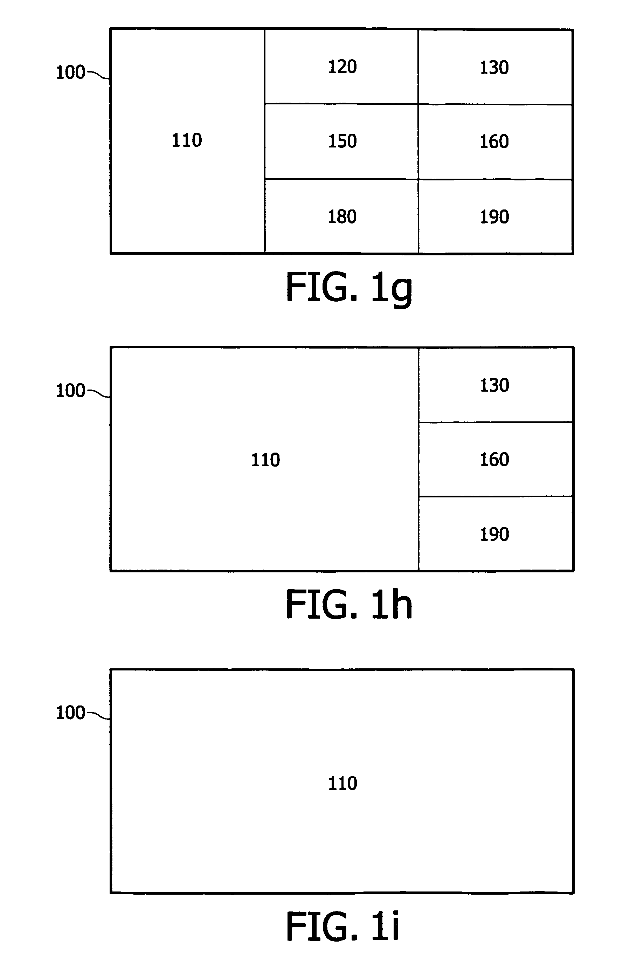

Figures 1b - 1i illustrate various manners in which window 110 can be resized. Figure 1b illustrates window 110 expanded horizontally in front of adjacent window 120 and window 120 is therefore hidden. Figure 1c illustrates window 110 further expanded horizontally in front of windows 120, 130 and windows 120, 130 are therefore hidden. Figure 1d illustrates window 110 expanded both horizontally in front of windows 120 and vertically in front of windows 140, 150 and windows 120, 140 and 150 are therefore hidden. Figure 1e illustrates window 110 expanded twice horizontally in front of windows 120, 130 and once vertically in front of windows 140, 150, 160 and windows 120 - 160 are therefore hidden. Figure If illustrates window 110 expanded vertically in front of window 140 and window 140 is therefore hidden. Figure 1g illustrates window 110 expanded further vertically in front of windows 140, 170 and windows 140 and 170 are therefore hidden. Figure 1h illustrates window 110 expanded once horizontally in front of window 120 and twice vertically in front of windows 140, 150, 170, 180 and windows 120, 140, 150, 170 and 180 are therefore hidden. Figure 1i illustrates window 110 expanded horizontally and vertically to cover the entire display 110 and all other windows 120 - 190 are hidden. Those of skill in the art will understand that Figures 1b - 1i illustrate only the expansion of window 110. Any of the windows 110 - 190 are expandable in a similar manner, and that while only a single window 110 is shown to be expanded, multiple windows are simultaneously expandable in a similar manner. Similarly, windows are movable so that they may be relocated through the above-described resizing method. For example, the window 110 shown in Figure 1i is resizable downward and to the right, continuing to cover the area occupied by windows 150, 160, 180 and 190 in Figure 1a, while revealing windows 120, 130, 140 and 170.

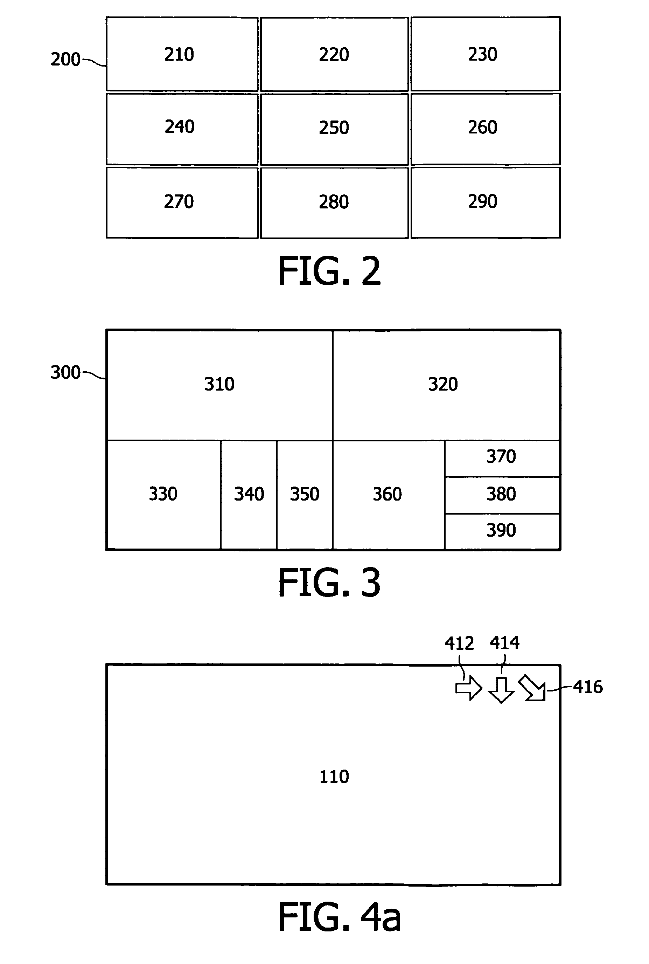

By providing a discrete set of viewing areas over which the windows 110 - 190 can be resized, rather than allowing continuous resizing to any window size (as is possible with a click-and-drag interface), the resizing process can be accomplished more quickly and with less screen clutter. Those of skill in the art will understand that in order to accomplish this, the viewing areas will typically be larger than a single pixel. While Figs. 1a - 1i illustrate a grid of rectangular viewing areas that are entirely contiguous, the viewing areas can also be separated by gaps; Fig. 2 illustrates such a display 200 with gaps including a set of windows 210 - 290 that are similar to the windows 110 - 190 of Fig. 1.

Further, while Figs. 1a - 1i and 2 illustrate displays 100 and 200 that have regularly sized windows 110 - 190 and 210 - 290, in other implementations the windows may be unevenly sized. Figure 3 illustrates such a display 300, which includes default windows 310 - 390 that are unevenly sized with respect to at least some of each other (e.g., windows 310, 330, and 340 are all differently sized).

Resizing of windows is accomplished by means of icons that are displayed to indicate the directions in which a window (e.g., window 110) can be resized. Display of icons is dynamic in that the icons displayed in a given window will reflect the directions in which that window is capable of expanding at a given point in time. Figure 4a shows an expanded view of window 110 of Figure 1a with arrows 412, 414 and 416 that the user can click to expand the window. Clicking on the horizontal arrow 412 (e.g., with a cursor controlled by a mouse) expands the window 110 horizontally; clicking on the vertical arrow 414 expands the window 110 vertically; clicking on the diagonal arrow 416 expands the window 110 diagonally (i.e., both horizontally and vertically). For example, beginning from the default setup of the display 100 in Fig. 1A, clicking on the arrow 412 results in the new window configuration shown in Fig. 1b. Beginning from the default setup of the display 100 in Fig. 1A, clicking on the arrow 414 results in the new window configuration shown in Fig. If. Beginning from the default setup of the display 100 in Fig. 1A, clicking on the arrow 416 results in the new window configuration shown in Fig. 1d.

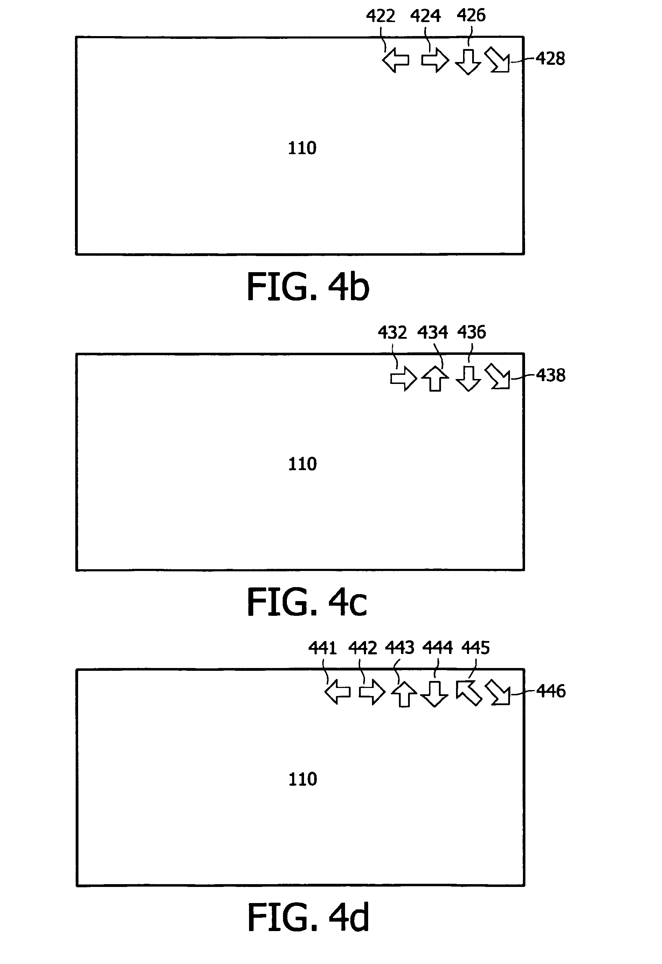

Continuing with the above example, Figure 4b shows an expanded view of window 110 of Fig. 1b, with the displayed icons 422, 424, 426 and 428 updated to reflect the new resizing possibilities for the window 110. Clicking on the left-facing horizontal arrow 422 reverses the expansion described above, uncovering window 120, and restoring window 110 to its original size as shown in Fig. 1a. Starting from the expanded view in Fig. 1b, clicking on the right-facing horizontal arrow 424 further expands window 110 horizontally, resulting in the window layout shown in Fig. 1c, wherein window 130 is further hidden. Starting from the expanded view in Fig. 1b, clicking on the vertical arrow 426 expands window 110 vertically, resulting in the window layout shown in Fig. 1d, wherein windows 140 and 150 are further hidden. Starting from the expanded view in Fig. 1b, clicking on the diagonal arrow 428 expands window 110 both horizontally and vertically, resulting in the window layout shown in Fig. 1e, wherein 130, 140, 150, and 160 are further hidden.

Figure 4c shows an expanded view of window 110 of Fig. If, with displayed icons 432, 434, 436 and 438 similarly updated as described above. Clicking on the horizontal arrow 432 expands window 110 horizontally, resulting in the window layout shown in Fig. 1d, wherein windows 150 and 120 are hidden. Starting from the expanded view in Fig. If, clicking on the upward-facing vertical arrow 434 reverses the previous expansion of window 110, and uncovers window 140, resulting in the original window layout shown in Fig. 1a. Starting from the expanded view in Fig. If, clicking on the downward-facing vertical arrow 436 further expands window 110 vertically, resulting in the window layout shown in Fig. 1g, wherein window 170 is further hidden. Clicking on the diagonal arrow 438 expands window 110 both horizontally and vertically, resulting in the window layout shown in Fig. 1h, wherein windows 120, 150, 170, and 180 are further hidden.

Figure 4d shows an expanded view of window 110 of Fig. 1d, with displayed icons 441, 442, 443, 444, 445 and 446 similarly updated as described above. Clicking on the left-facing horizontal arrow 441 contracts window 110 horizontally, resulting in the window layout shown in Fig. If. Starting from the expanded view in Fig. 1d, clicking on the right-facing horizontal arrow 442 further expands window 110 horizontally, resulting in the window layout shown in Fig. 1e, wherein windows 130 and 160 are further hidden. Starting from the expanded view in Fig. 1d, clicking on the upward-facing vertical arrow 443 contracts window 110 vertically, resulting in the window layout shown in Fig. 1b, wherein windows 140 and 150 are uncovered. Starting from the expanded view in Fig. 1d, clicking on the downward-facing vertical arrow 444 further expands window 110 vertically, resulting in the window layout shown in Fig. 1h, wherein windows 170 and 180 are further hidden. Starting from the expanded view in Fig. 1d, clicking on the upward-left-facing diagonal arrow 445 contracts window 110 horizontally and vertically, returning window to its original size in Fig. 1a, wherein windows 120, 140, and 150 are uncovered. Finally, starting from the expanded view in Fig. 1d, clicking on the downward-right-facing diagonal arrow 446 further expands window 110 horizontally and vertically, resulting in the window layout shown in Fig. 1i, wherein windows 130, 160, 170, 180, and 190 are further hidden. Those of skill in the art will understand that the window permutations described above are only exemplary and that others are equally possible.

In all cases, the resizing options as indicated by the display icons are adjusted to what is allowed by the existing viewing areas. While single clicks are used to resize a window by a single step (horizontally, vertically, or diagonally, as described above), multiple clicks may be used for multiple resizing. It is possible for a double click to be configured to resize a window by two increments (if two increments are available); it is also alternatively possible for a double click to be configured to maximize or minimize a window in the direction of the selected icon. Additionally, while Figs. 4a - 4d illustrate windows with resizing icons in the top right corner, they may be located elsewhere.

If resizing of a particular window by the user is not desired, the display 100 can be configured not to display any resizing icons. This may be desirable, for example, where a particular window displays content that may be degraded (e.g., pixelated, distorted, etc.) if it is expanded or contracted compared to its default size. Optionally, a window that has been covered by another can be uncovered programmatically. For example, assume that the Fig. 1a again shows a default setup and that window 110 has been expanded horizontally, yielding the display 100 of Fig. 1b and hiding window 120. If a program operating on the display 100 is providing content in window 120 that needs to be uncovered (e.g., an alert message), the window 120 may uncover itself. This uncovering could be accomplished, for example, by programmatically resizing window 110 to its original size shown in Fig. 1a.

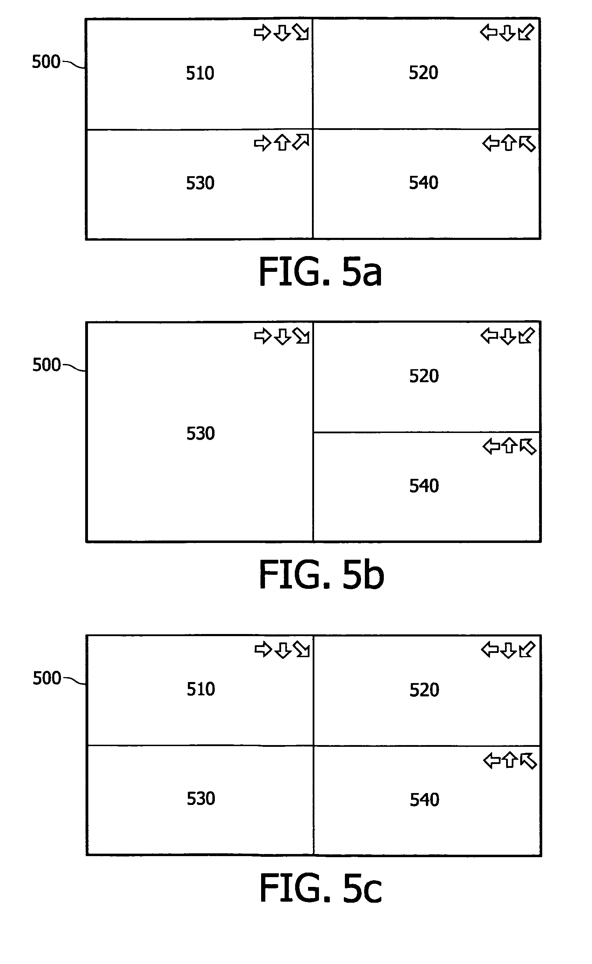

The windows of the display 100 can also be resized programmatically (rather than by the user) in response to specific events occurring in the application or system being displayed. This can include the resizing of multiple windows simultaneously. One example of this is the programmatic resizing of a window whose resizing icons were covered by another window, rendering it impossible for the user to resize the window if this were not corrected. Figs. 5a - 5c illustrate an example of a situation that would require this resizing. Fig. 5a illustrates a display 500 containing windows 510, 520, 530 and 540 before any resizing has taken place. Each of the windows has resizing controls as described above. Fig. 5b illustrates the same display 500 after window 530 has been vertically maximized to cover window 510. Fig. 5c illustrates the same display 500 after window 510 has been programmatically uncovered as described above. In Fig. 5c, window 510 covers the top of window 530, including its resizing controls. After this occurs, window 530 can be programmatically resized to its original size, as shown in Fig. 5a, to regain access to its resizing controls.

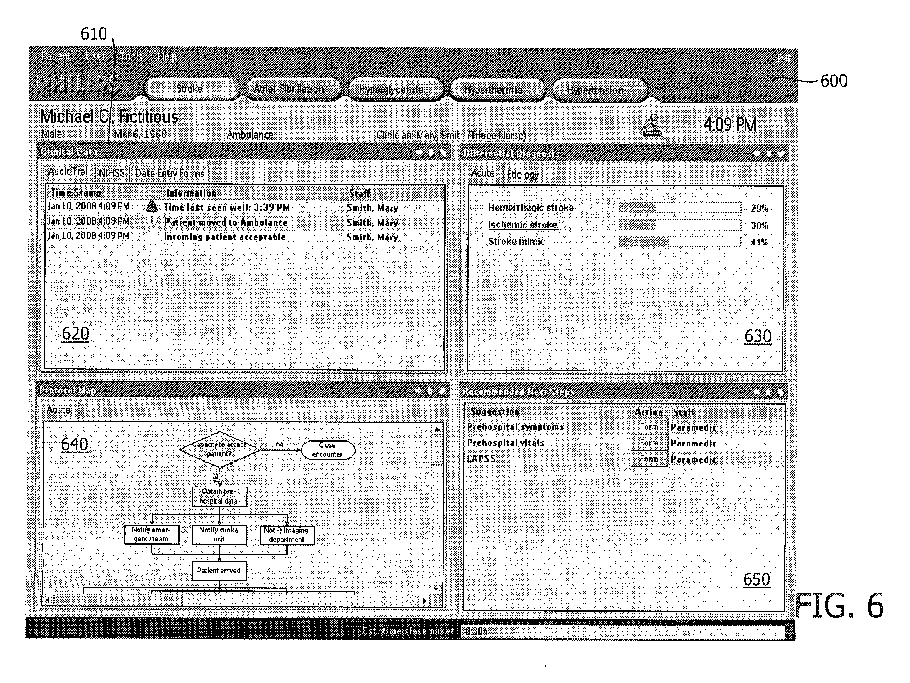

Fig. 6 shows an exemplary computer screen 600 showing a display 610 including four discretely resizable windows 620, 630, 640 and 650. As described above, the display 610 does not occupy the entire screen 600, so that other content (e.g., the time, selectable dropdown menus, etc.) may also be displayed.

The displays described above, and the methods for resizing the windows of said displays, provide a simple, convenient user interface. By allowing resizing with a single click, less user action is required. Further, in the event that the user is not satisfied with the new appearance of the screen, the original appearance may be easily restored. Additionally, restricting window sizes to a predetermined set of viewing areas keeps the screen organized rather than allowing it to become cluttered. All of these attributes are beneficial for applications that are used under time pressure, such as on a computer used for clinical decision support in an emergency room. Of course, these attributes may be used in applications that are not necessarily used under time pressure (i.e., time pressure is not a requisite to the enjoyment of these attributes).

It is further noted that one of skill in the art will understand that the instructions to implement the exemplary embodiments may be included in the display device itself or in a separate computing device connected to and controlling the display device.

It will be apparent to those skilled in the art that various modifications may be made to the software applications and methods described herein, without departing from the scope of the description. Thus, it is intended that the present disclosure cover modifications and variations of the software applications and methods described herein provided they come within the scope of the appended claims.

It is also noted that the claims may include reference signs/numerals in accordance with PCT Rule 6.2(b). However, the present claims should not be considered to be limited to the exemplary embodiments corresponding to the reference signs/numerals.

## Claims

1. A system for generating a graphical user interface for display on a display screen (100), the graphical user interface comprising, when displayed on the display screen (100):
a discrete set of viewing areas arranged in a grid;
a plurality of discretely resizable windows (110-190), each window (110-190) being displayed in an area corresponding to a subset of the discrete set of viewing areas; and
one or more resizing icons (412, 414, 416) corresponding to, and being displayed with, each of the discretely resizable windows (110-190);
wherein the system is arranged for:
generating the one or more resizing icons (412, 414, 416) to indicate directions in which a corresponding one of the discretely resizable windows (110-190) is currently capable of expanding, based on the system determining said directions;
receiving, when the graphical user interface is displayed on the display screen (100), a selection of one of the resizing icons (412, 414, 416) by the user;
discretely resizing the window (110-190) corresponding to the selected resizing icon (412, 414, 416) in the direction indicated by the selected resizing icon (142, 414, 416) by displaying the window (110-190) in a further area corresponding to a further subset of the discrete set of viewing areas, wherein said resizing is performed in increments corresponding to a number of times said resizing icon (142, 414, 416) is selected, and wherein a continuous resizing of the window to any window (110, 190) size is disallowed.

2. The system of claim 1, wherein the selection comprises a click on one of the one or more resizing icons (412, 414, 416).

3. The system of claim 1, wherein the resizing icons (412, 414, 416) comprise arrows.

4. The system of claim 1, wherein each of the discrete set of viewing areas is of substantially the same size.

5. The system of claim 1, wherein the discrete set of viewing areas are of nonuniform sizes.

6. The system of claim 1, wherein the further number of viewing areas is greater than the number of viewing areas.

7. The system of claim 1, wherein an application program automatically resizes the window (110-190).

8. The system of claim 1, further comprising:
a display area in addition to the plurality of windows (110-190).

9. The system of claim 1, wherein adjacent viewing areas are one of contiguous and separated.

10. A method for generating a graphical user interface for display on a display screen (100), the graphical user interface comprising, when displayed on the display screen (100), (i) a discrete set of viewing areas arranged in a grid, (ii) a plurality of discretely resizable windows (110-190), each window (110-190) being displayed in an area corresponding to a subset of the discrete set of viewing areas, and (iii) one or more resizing icons (412, 414, 416) corresponding to, and being displayed with, each of the discretely resizable windows (110-190), and the method comprising:
generating the one or more resizing icons (412, 414, 416) to indicate directions in which a corresponding one of the discretely resizable windows (110 - 190) is currently capable of expanding, based on a determining of said directions;
receiving, when the graphical user interface is displayed on the display screen (100), an instruction based on a selection of one of the one or more resizing icons (412, 414, 416) by a user; and
discretely resizing the window (110-190) corresponding to the instruction in the direction indicated by the selected resizing icon (412, 414, 416) by displaying the window (110-190) in a further area corresponding to a further subset of the discrete set of viewing areas, wherein said resizing is performed in increments corresponding to a number of times said resizing icon (412, 414, 416) is selected, and wherein a continuous resizing of the window (110-190) to any window size is disallowed.

11. The method of claim 10, wherein the instruction is received from a software application.

12. The method of claim 10, further comprising:
resizing a further window (110-190) in response to resizing the window (110-190),
wherein the further window (110-190) covers a further subset of the discrete set of viewing areas.

13. The method of claim 10, further comprising:
displaying information in an area of a display (100) not including the viewing areas.

14. A computer readable storage medium including a set of instructions executable by a processor, the set of instructions being arranged for causing the processor to perform the method according to claim 10.

## Patentansprüche

1. System zur Erzeugung einer grafischen Benutzeroberfläche zur Darstellung auf einem Bildschirm (100), wobei die grafische Benutzeroberfläche bei Darstellung auf dem Bildschirm (100) umfasst:
einen diskreten Satz von in einem Gitter angeordneten Betrachtungsbereichen;
mehrere diskret größenänderbare Fenster (110-190), wobei jedes Fenster (110-190) in einem einer Teilmenge des diskreten Satzes von Betrachtungsbereichen entsprechenden Bereich dargestellt wird; sowie
ein oder mehrere Größenänderungs-Icons (412, 414, 416), die jedem der diskret größenänderbaren Fenster (110-190) entsprechen und mit diesen dargestellt werden; wobei das System so eingerichtet ist, dass es:
das eine oder mehrere Größenänderungs-Icons (412, 414, 416) erzeugt, um Richtungen anzuzeigen, in denen ein entsprechendes der diskret größenänderbaren Fenster (110-190), basierend auf den von dem System ermittelten Richtungen, gegenwärtig imstande ist, sich zu erweitern;
eine Auswahl von einem der Größenänderungs-Icons (412, 414, 416) von dem Benutzer empfangen wird, wenn die grafische Benutzeroberfläche auf dem Bildschirm (100) dargestellt wird;
das Fenster (110-190) entsprechend dem ausgewählten Größenänderungs-Icon (412, 414, 416) in der von dem ausgewählten Größenänderungs-Icon (412, 414, 416) angezeigten Richtung durch Darstellen des Fensters (110-190) in einem einer weiteren Teilmenge des diskreten Satzes von Betrachtungsbereichen entsprechenden weiteren Bereich diskret größengeändert wird, wobei die Größenänderung in Inkrementen durchgeführt wird, die einer Anzahl von Malen entspricht, die das Größenänderungs-Icon (412, 414, 416) ausgewählt wird, und wobei eine kontinuierliche Größenänderung des Fensters (110-190) auf irgendeine Fenstergröße nicht erlaubt ist.

2. System nach Anspruch 1, wobei die Auswahl einen Click auf ein des einen oder der mehreren Größenänderungs-Icons (412, 414, 416) umfasst.

3. System nach Anspruch 1, wobei die Größenänderungs-Icons (412, 414, 416) Pfeile umfassen.

4. System nach Anspruch 1, wobei jeder des diskreten Satzes von Betrachtungsbereichen im Wesentlichen die gleiche Größe hat.

5. System nach Anspruch 1, wobei der diskrete Satz von Betrachtungsbereichen keine einheitlichen Größen aufweist.

6. System nach Anspruch 1, wobei die weitere Anzahl von Betrachtungsbereichen größer als die Anzahl von Betrachtungsbereichen ist.

7. System nach Anspruch 1, wobei ein Applikationsprogramm das Fenster (110-190) automatisch größenverändert.

8. System nach Anspruch 1, das weiterhin umfasst:
einen Darstellungsbereich zusätzlich zu den mehreren Fenstern (110-190).

9. System nach Anspruch 1, wobei aneinandergrenzende Betrachtungsbereiche zusammenhängend oder getrennt sind.

10. Verfahren zur Erzeugung einer grafischen Benutzeroberfläche zur Darstellung auf einem Bildschirm (100), wobei die grafische Benutzeroberfläche bei Darstellung auf dem Bildschirm (100) umfasst: (i) einen diskreten Satz von in einem Gitter angeordneten Betrachtungsbereichen, (ii) mehrere diskret größenänderbare Fenster (110-190), wobei jedes Fenster (110-190) in einem einer Teilmenge des diskreten Satzes von Betrachtungsbereichen entsprechenden Bereich dargestellt wird, sowie (iii) ein oder mehrere Größenänderungs-Icons (412, 414, 416), die jedem der diskret größenänderbaren Fenster (110-190) entsprechen und mit diesen dargestellt werden, wobei das Verfahren die folgenden Schritte umfasst, wonach:
das eine oder mehrere Größenänderungs-Icons (412, 414, 416) erzeugt werden, um Richtungen anzuzeigen, in denen ein entsprechendes der diskret größenänderbaren Fenster (110-190), basierend auf den von dem System ermittelten Richtungen, gegenwärtig imstande ist, sich zu erweitern;
eine Anweisung, basierend auf einer Auswahl von einem des einen oder der mehreren Größenänderungs-Icons (412, 414, 416) von dem Benutzer, empfangen wird, wenn die grafische Benutzeroberfläche auf dem Bildschirm (100) dargestellt wird;
das Fenster (110-190) entsprechend der Anweisung in der von dem ausgewählten Größenänderungs-Icon (412, 414, 416) angezeigten Richtung durch Darstellen des Fensters (110-190) in einem einer weiteren Teilmenge des diskreten Satzes von Betrachtungsbereichen entsprechenden weiteren Bereich diskret größengeändert wird, wobei die Größenänderung in Inkrementen durchgeführt wird, die einer Anzahl von Malen entspricht, die das Größenänderungs-Icon (412, 414, 416) ausgewählt wird, und wobei eine kontinuierliche Größenänderung des Fensters (110-190) auf irgendeine Fenstergröße nicht erlaubt ist.

11. Verfahren nach Anspruch 10, wobei die Anweisung von einer Software-Applikation empfangen wird.

12. Verfahren nach Anspruch 10, wonach weiterhin:
in Reaktion auf die Größenänderung des Fensters (110-190) ein weiteres Fenster (110-190) größengeändert wird;
wobei das weitere Fenster (110-190) eine weitere Teilmenge des diskreten Satzes von Betrachtungsbereichen abdeckt.

13. Verfahren nach Anspruch 10, wonach weiterhin:
Informationen in einem den Betrachtungsbereich nicht einschließenden Bereich eines Displays (100) dargestellt werden.

14. Computerlesbares Speichermedium, das einen Satz von durch einen Prozessor ausführbaren Anweisungen enthält, wobei der Satz von Anweisungen dazu dient, zu bewirken, dass der Prozessor das Verfahren nach Anspruch 10 durchführt.

## Revendications

1. Système pour générer une interface utilisateur graphique pour l'affichage sur un écran d'affichage (100), l'interface utilisateur graphique comprenant, lorsqu'elle est affichée sur l'écran d'affichage (100) :
un jeu discret de zones de visionnement agencées en une grille ;
une pluralité de fenêtres redimensionnables de façon discrète (110-190), chaque fenêtre (110-190) étant affichée dans une zone correspondant à un sous-jeu du jeu discret de zones de visionnement ; et
une ou plusieurs icônes de redimensionnement (412, 414, 416) correspondant à chacune des fenêtres redimensionnables (110-190) ;
dans lequel le système est agencé pour :
générer la ou les icônes de redimensionnement (412, 414, 416) pour indiquer des directions dans lesquelles une fenêtre correspondante parmi les fenêtres redimensionnables (110-190) est actuellement capable de s'agrandir, en fonction de la détermination, par le système, desdites directions ;
recevoir, lorsque l'interface utilisateur graphique est affichée sur l'écran d'affichage (100), une sélection d'une des icônes de redimensionnement (412, 414, 416) par l'utilisateur ;
redimensionner de façon discrète la fenêtre (110-190) correspondant à l'icône de redimensionnement sélectionnée (412, 414, 416) dans la direction indiquée par l'icône de redimensionnement sélectionnée (412, 414, 416) en affichant la fenêtre (110-190) dans une zone supplémentaire correspondant à un sous-jeu supplémentaire du jeu discret de zones de visionnement, dans lequel ledit redimensionnement est réalisé en incréments correspondant à un nombre de fois que ladite icône de redimensionnement (412, 414, 416) est sélectionnée, et dans lequel un redimensionnement continu de la fenêtre à une quelconque dimension de fenêtre (110-190) est refusé.

2. Système selon la revendication 1, dans lequel la sélection comprend un clic sur une parmi la ou les icônes de redimensionnement (412, 414, 416).

3. Système selon la revendication 1, dans lequel les icônes de redimensionnement (412, 414, 416) comprennent des flèches.

4. Système selon la revendication 1, dans lequel chacune parmi le jeu discret de zones de visionnement est de dimension sensiblement identique.

5. Système selon la revendication 1, dans lequel le jeu discret de zones de visionnement sont de dimensions non uniformes.

6. Système selon la revendication 1, dans lequel le nombre supplémentaire de zones de visionnement est supérieur au nombre de zones de visionnement.

7. Système selon la revendication 1, dans lequel un programme d'application redimensionne automatiquement la fenêtre (110-190).

8. Système selon la revendication 1, comprenant en outre :
une zone d'affichage en plus de la pluralité de fenêtres (110-190).

9. Système selon la revendication 1, dans lequel des zones de visionnement adjacentes sont une parmi contiguës et séparées.

10. Procédé pour générer une interface utilisateur graphique pour l'affichage sur un écran d'affichage (100), l'interface utilisateur graphique comprenant, lorsqu'elle est affichée sur l'écran d'affichage (100), (i) un jeu discret de zones de visionnement agencées en une grille, (ii) une pluralité de fenêtres redimensionnables de façon discrète (110-190), chaque fenêtre (110-190) étant affichée dans une zone correspondant à un sous-jeu du jeu discret de zones de visionnement, et (iii) une ou plusieurs icônes de redimensionnement (412, 414, 416) correspondant à chacune des fenêtres redimensionnables (110-190), et le procédé comprenant :
la génération de la ou des icônes de redimensionnement (412, 414, 416) pour indiquer des directions dans lesquelles une fenêtre correspondante parmi les fenêtres redimensionnables (110-190) est actuellement capable de s'agrandir, en fonction d'une détermination desdites directions ;
la réception, lorsque l'interface utilisateur graphique est affichée sur l'écran d'affichage (100), d'une instruction en fonction d'une sélection d'une parmi la ou les icônes de redimensionnement (412, 414, 416) par un utilisateur ; et
le redimensionnement discret de la fenêtre (110-190) correspondant à l'instruction dans la direction indiquée par l'icône de redimensionnement sélectionnée (412, 414, 416) en affichant la fenêtre (110-190) dans une zone supplémentaire correspondant à un sous-jeu supplémentaire d'un jeu discret de zones de visionnement, dans lequel ledit redimensionnement est réalisé en incréments correspondant à un nombre de fois que ladite icône de redimensionnement (412, 414, 416) est sélectionnée, et dans lequel un redimensionnement continu de la fenêtre (110-190) à une quelconque dimension de fenêtre est refusé.

11. Procédé selon la revendication 10, dans lequel l'instruction est reçue à partir d'une application logicielle.

12. Procédé selon la revendication 10, comprenant en outre :
le redimensionnement d'une fenêtre supplémentaire (110-190) en réponse au redimensionnement de la fenêtre (110-190),
dans lequel la fenêtre supplémentaire (110-190) couvre un sous-jeu supplémentaire du jeu discret de zones de visionnement.

13. Procédé selon la revendication 10, comprenant en outre :
l'affichage d'informations dans une zone d'un affichage (100) n'incluant pas les zones de visionnement.

14. Support de stockage lisible par ordinateur incluant un jeu d'instructions exécutables par un processeur, le jeu d'instructions étant agencé pour faire en sorte que le processeur réalise le procédé selon la revendication 10.
